Europäisches Patentamt

European Patent Office

Office européen des brevets

(11) Publication number: **0 381 212**
**A2**

(12) **EUROPEAN PATENT APPLICATION**

(21) Application number: **90102006.5**

(51) Int. Cl.5: **G11B 7/08**

(22) Date of filing: **01.02.90**

(30) Priority: **02.02.89 JP 22566/89**

(43) Date of publication of application:
**08.08.90 Bulletin 90/32**

(84) Designated Contracting States:
**DE FR**

(71) Applicant: **HITACHI, LTD.**
**6, Kanda Surugadai 4-chome**
**Chiyoda-ku, Tokyo 101(JP)**

(72) Inventor: **Ichikawa, Atsushi**
**419-55, Shimohirooka**
**Tsukuba-shi(JP)**
Inventor: **Sato, Goro**
**Niihariryo, 3602, Shimoinayoshi,**
**Chiyodamura**
**Niihari-gun, Ibaraki-ken(JP)**

(74) Representative: **Patentanwälte Beetz sen. -**
**Beetz jun. Timpe - Siegfried -**
**Schmitt-Fumian- Mayr**
**Steinsdorfstrasse 10**
**D-8000 München 22(DE)**

(54) **Electrostatic-type multidimensional actuator.**

(57) An electrostatic-type multidimensional actuator drive by making use of an electrostatic force has a fixed electrode assembly (12) having in combination with driving electrodes (12a, 12c) extending in a direction of the Y axis othogonal to the Y axis and associated driving electrodes (12b, 12d) extending in a direction of the Y axis. These driving electrodes of the fixed electrode assembly (12) are secured on a fixture holder, and a movable electrode body (11a) is provided extending opposite to and spaced at a short distance from the fixed electrode assembly (12) on the fixture holder. The driving electrodes extending in the X and Y directions mounted on the fixed electrode assembly are respectively dislocated in the Y and X directions with respect to the associated X-directional and Y-directional electrodes on a movable holder to form a movable driving electrode body.

**FIG. 5**

EP 0 381 212 A2

## ELECTROSTATIC-TYPE MULTIDIMENSIONAL ACTUATOR

### BACKGROUND OF THE INVENTION

The present invention relates to an electrostatic-type multidimensional actuator and, more particularly, to a precisely positioning electrostatic-type multidimensional actuator which is suitable, for example, to a microminiature optical head and the like to be displaced in a multidimensional direction.

As a conventional miniature actuator for micro-positioning, for example, a certain actuator is disclosed in Japanese Patent Unexamined Publication No. 62-262233, which kind of actuator generally utilizes piezoelectric effect to generate a potential difference when a voltage is impressed to piezoelectric materials such as barium titanate ($BaTiO_3$) and leas titanate zirconate (abbreviated as PZT).

In another type of actuator, an actuator which adopts electrostatic force is discussed in "Sensors and Actuators", Vol. 11, No. 2, Pages 189 to 206 (1987).

this electrostatic force adopting actuator is incorporated in a rotary motor. However, no suggestion or representation concerning an actuator for micro-positioning in a multidimensional direction can be taught in the above references. Particularly, there is no disclosure relative to a structure of an actuator which is suitable for micro-positioning and miniaturizing an optical head for an optical disk which records and/or reproduces information.

### SUMMARY OF THE INVENTION

One object of the present invention is to provide an electrostatic-type multidimensional actuator which is reduced in size and weight.

Another object of the invention is to provide a miniature light-weight electrostatic-type multidimensional actuator which is capable of generating a potential difference enough to precisely position an object.

In order to attain the above-described objects, the electrostatic-type multidimensional actuator according to the present invention comprises: a first electrode body including a first plane electrode having a shape symmetrical with respect to the X axis, a second plane electrode symmetrical to the first plane electrode with respect to the Y axis orthogonal to the X axis, a third plane electrode having a shape symmetrical with respect to the Y axis, and a fourth plane electrode symmetrical to the third plane electrode with respect to the X axis which are mounted on an electrical insulator in combination with one another; a second electrode body serving as a fifth plane electrode, which extends opposite to and is spaced at a short distance from the first electrode body, including a configuration symmetrical with respect to the X and Y axes, a shape of the shadow projecting from the second electrode body to the first electrode assembly in a direction of the Z axis orthogonal to the X and Y axes being located inside the respective plane electrodes of the first electrode body; an elastic member for supporting between the first electrode body and the second electrode body; and means for controlling relative electrical potentials of the first to fourth plane electrodes with respect to the fifth plane electrode, respectively.

These and other objects and features of the present invention will become more apparent from the following description of the preferred embodiments.

### BRIEF DESCRIPTION OF THE DRAWINGS

Fig. 1 is an exploded perspective view showing a construction of an electrostatic-type three-dimensional actuator according to one embodiment of the present invention;

Fig. 2 is a schematical top plan view of the embodiment shown in Fig. 1, from which a holder is removed away for clarification;

Fig. 3 is a vertical cross-sectional view of the embodiment in Fig. 1;

Fig. 4 is an exploded perspective view of another embodiment of an electrostatic-type two-dimensional actuator according to the present invention;

Fig. 5 is a top plan view of the electrode assemblies of the embodiment in Fig. 4;

Fig. 6 is an explanatory view of a force acting between the two electrodes;

Fig. 7 is an exploded perspective view of still another embodiment of an electrostatic-type two-dimensional actuator according to the invention; and

Fig. 8 is a view for explanation of an operation of the embodiment in Fig. 7.

## DETAILED DESCRIPTION OF THE PREFERRED EMBODIMENTS

At first, a theory on which the present invention has been developed and its operational principle will be explained with reference to Fig. 6.

Fig. 6 is an explanatory view of a force acting between two electrodes.

As shown in Fig. 6, when an electrode 2A is positioned at a short distance apart from an electrode 3A in the X direction, both electrodes having the same rectangular sheet-like configurations in this case, a force acting on the electrode 3A is expressed by the following equations.

A force in the X direction is referred to as $F_x$ and a force in the Z direction is as $F_z$.

$$F_x = \frac{\varepsilon L V^2}{2h} \qquad \ldots\ldots (1)$$

$$F_z = \frac{\varepsilon L w V^2}{2h^2} \qquad \ldots\ldots (2)$$

where,

L is a length of the overlapped portion between the electrodes in the Y direction,

w is a widthwise length of the overlapped portion between the electrodes in the X direction,

h is a distance between the electrodes in the Z direction,

V is a voltage applied to the electrode, and

$\varepsilon$ is a dielectric constant of the space between the electrodes.

The direction of either force $F_x$ or $F_z$ cannot be changed in the reverse direction by controlling the voltage. In order to cause the electrode 2A to apply a force to the electrode 3A in the negative direction along the X axis, the electrodes in a pair have to be set at a location where the electrode 2A corresponding to the electrode 3A is set at the opposite side in the negative direction relative to the location shown in the figure. Further, it is necessary to position the electrode 2A at a location where the electrode 2A has to be set below the electrode 3A in the negative direction of the Z axis, in order to cause the force in the negative direction on the Z axis.

As a result, it is possible to selectively displace this electrode 3A in the respective positive and negative directions, when the electrode 3A is used as a movable electrode and the electrode 2A serving as the fixed electrode is provided corresponding to the opposite positive and negative sides of the movable electrode 3A in the X, Y and Z directions and applying a voltage between the fixed electrode existing in the desired X, Y and Z directions and the movable electrode.

According to the equation (2), the movable electrode is positionally displaced by an attraction force between the fixed electrode and itself, so that the distance h between the fixed and movable electrodes is shortened, and it is thus impossible to control the generated force $F_z$ only by the voltage.

On the other hand, because the lateral driving force $F_x$ can be determined only by the voltage V, as be understood from the equation (1), it is easier to utilize the lateral driving force $F_x$ in order to precisely control positioning of the movable electrode. However, since the distance h between the fixed and movable electrodes is generally settled smaller than the widthwise length W of the overlapped portions of the fixed and movable electrodes, the suction force $F_z$ is larger than the lateral driving force $F_x$. Making use of a fact that the lateral driving force $F_x$ is independend of the widthwise length w of the overlapped portions of the fixed and movable electrodes, if the length w is minimized and a plurality of pairs of electrodes similar to those of Fig. 6 are provided, it is made possible to increase the lateral driving force $F_x$ generated on a unit area.

Preferred embodiments of the present invention making use of the above-mentioned principle will be described hereinafter with reference to the accompanying drawings.

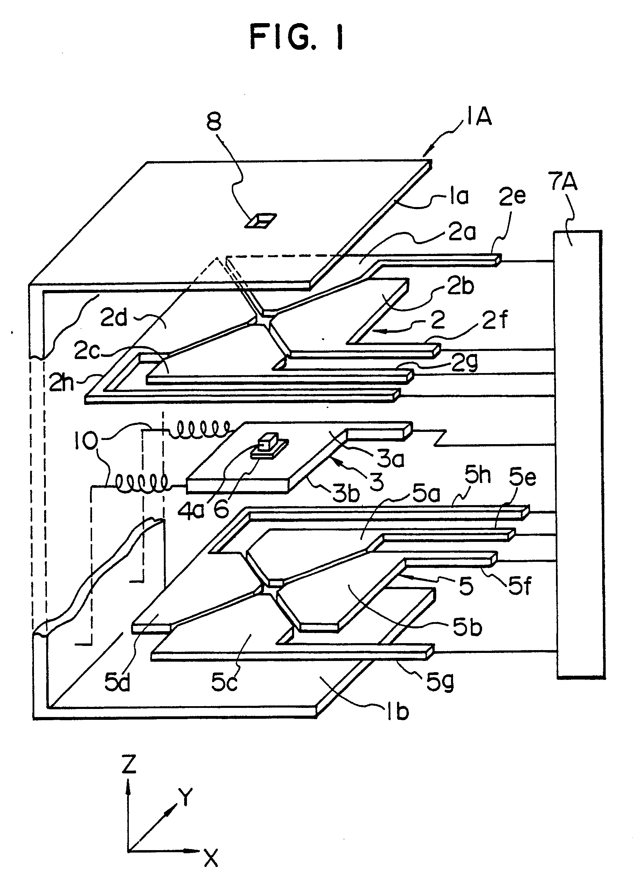

Referring now to Figs. 1 to 3, there is illustrated a three-dimensional actuator for driving a one-chip optical head in three directions of the X, Y and Z axes.

In these figures, reference numeral 1A designates a holder made from an electrical insulator, and reference numeral 2 designates an upper fixed electrode corresponding to a first electrode assembly. The upper fixed electrode 2 is provided in combination with a first plane electrode 2b having a shape symmetrical with respect to the X axis, a second plane electrode 2d symmetrical to the first plane electrode 2b with respect to the Y axis orthogonal to the X axis, a third plane electrode 2a having a shape

3

symmetrical with respect to the Y axis, and a fourth plane electrode symmetrical to the third plane electrode with respect to the X axis. These plane electrodes are secured to the lower surface 1a of an upper portion of the holder 1.

Strictly speaking, the upper fixed electrode 2 comprises the four plate-like electrodes 2a, 2b, 2c and 2d, those respective plane electrodes having configurations obtained from equally separating a generally square plane electrode into four sections along its diagonal lines, and they have apex portions each with an angle of 45°. In the upper fixed electrode, the four electrodes are disposed opposite to one another on one plane in such a manner that the respective apex portions of the electrodes are directed toward the central point of the upper fixed electrode 2, while each electrode is spaced apart from the adjacent electrode at an equal distance. The electrodes which are located in the above-mentioned manner respectively include elongations 2e, 2f, 2g and 2h extending in the same direction.

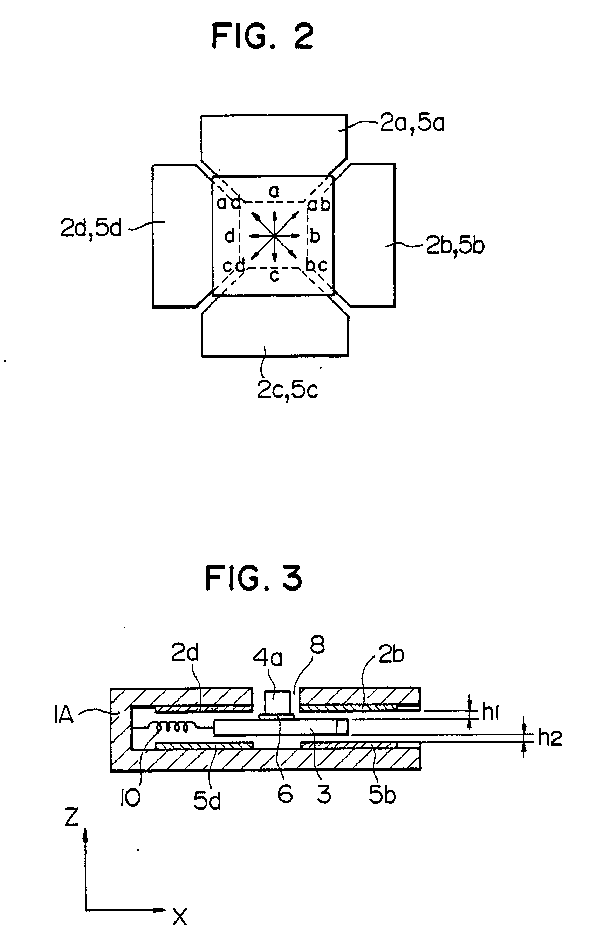

Reference numeral 3 designates a movable electrode which is a second electrode body disposed in parallel with the upper fixed electrode 2 interposing a short distance $h_1$ therebetween (see Fig. 3). The movable electrode 3 is in a square shape symmetrical with respect to both directions of the X and Y axes. A shape of the shadow projecting from the movable electrode 3 in the Z direction orthogonal to the X and Y axes is located inside the respective plane electrodes 2a to 2d of the upper fixed electrode 2. In other words, the vertical axis of the square movable electrode 3 coincides with that of the upper fixed electrode 2, as shown in Fig. 2. The respective plane electrodes 2a, 2b, 2c and 2d of the upper fixed electrode 2 and the movable electrode 3 are vertically spaced from each other, in the state that the respective plane electrodes have the same overlapped area by the movable electrode 3. This movable electrode 3 includes a fifth plane electrode 3a on an upper surface thereof opposite to the upper fixed electrode 2 and a sixth plane electrode 3b on a lower surface thereof.

Reference numeral 4a designates an optical head, which is mounted on the movable electrode 3 at its center through an interposed insulator 6. Reference numeral 5 designates a lower fixed electrode serving as a third electrode assembly which is located in parallel with the movable electrode 3 and spaced at a short distance $h_2$ therebetween (see Fig. 3). The lower fixed electrode 5 is provided in combination with a seventh plane electrode 5b having a shape symmetrical with respect to the X axis, an eighth plane electrode 5d symmetrical to the seventh plane electrode 5b with respect to the Y axis, a ninth plane electrode 5a having a shape symmetrical with respect to the Y axis and, a tenth plane electrode 5c symmetrical to the ninth plane electrode 5a with respect to the X axis, and is secured to an upper surface 1b of the lower portion of the holder 1A. That is, the directions of extensions 5e, 5f, 5g and 5h which are respectively attached to the plane electrodes 5a, 5b, 5c and 5d of the lower fixed electrode 5 are different from the directions of the elongations 2e, 2f, 2g and 2h which are attached to the plane electrodes 2a, 2b, 2c and 2d of the upper fixed electrode 2. The residual portion of the lower fixed electrode 5 is the same as that of the upper fixed electrode 2. The lower fixed electrode 5 is located symmetrical to the upper fixed electrode 2 with respect to the movable electrode 3.

Reference numeral 7A designates a controller for respectively controlling voltage between the opposing electrodes. The controller 7A is capable of independently controlling the respective relative electric potentials of the first to fourth plane electrodes 2a to 2d of the upper fixed electrode 2 with respect to the fifth plane electrode 3a of the movable electrode 3 and the respective relative electric potentials of the seventh to tenth plane electrodes 5a to 5d of the lower fixed electrode 5 with respect to the sixth plane electrode 3b of the movable electrode 3.

Reference numeral 8 indicates a hole perforated through the upper portion of the holder 1A at the center. As shown in Fig. 3, the hole 8 is arranged so as not to bring the optical head 4 into contact with the central portion of the upper portion of the holder 1A.

Reference numeral 10 designates a supporting spring which is an elastic member for supportingly connecting the movable electrode 3 to the holder 1A of the electrical insulator. That is to say, the movable electrode 3 is sustained by the supporting spring 10 having a low rigidity in the X, Y and Z directions in such a manner that the optical head 4 is positioned generally at the center of the hole 8.

The movable electrode 3 is connected to the controller 7A by means of an elastic electric conductor, and the voltage of the movable electrode is maintained at zero. In the next, an operation of the electrostatic-type multidimensional actuator manufactured in the above-described manner will be explained below.

When the movable electrode 3 is driven upwardly in the Z direction, the same voltage is applied to either or both pairs of the plane electrodes 2a, 2c of the upper fixed electrode 2 and the plane electrodes 2b, 2d of the same.

On the contrary, when the movable electrode 3 is driven downwardly in the Z direction, the same voltage is applied to either or both pairs of the plane electrodes 5a, 5c of the lower fixed electrode 5 and the plane electrodes 5b, 5d of the same.

4

As for drive of the optical head on the X-Y plane, a voltage is applied to either or two adjacent pairs of the plane electrode 2a of the upper fixed electrode 2 and the plane electrode 5a of the lower fixed electrode 5 which faces to the plane electrode 2a, similarly the plane electrodes 2b to 5b, 2c to 5c, and 2d to 5d, thereby driving the movable electrode 3 on which the optical head 4 is mounted in the eight directions of $\underline{a}$, ab, b, bc, c, cd, d, ad indicated by the arrows in Fig. 2. for example, when a voltage is applied to the plane electrodes 2a and 5a, the movable electrode is driven in the positive direction (a-direction) of the Y axis, and when the two pairs of the plane electrodes 2a, 5a and 2b, 5b are supplied with a voltage, the movable electrode is driven in the intermediate direction (ab-direction) of the positive directions of the X and Y axes. A dirving force in the case where the voltage is applied to both pairs of the plane electrodes 2a, 5a, and 2b, 2b is larger than that in the case when the voltage is applied to only one pair of the plane electrodes 2a, 5a.

Thus, it is made possible to move the movable electrode on the X-Y plane, by uniformly adding a force to the movable electrode 3 from both of the upper and lower sides thereof.

Provided that the distance $h_1$ between the movable electrode 3 and the upper fixed electrode 2 is different from the distance $h_2$ between the movable electrode 3 and the lower fixed electrode 5, an applied voltage on the upper fixed electrode side 2 is varied from that on the lower fixed electrode side 5, whereby a attraction force from the upper fixed electrode 2 which acts on the movable electrode 3 and a attraction force from the lower fixed electrode 5 are canceled with each other.

It is possible to drive the movable electrode 3 in an arbitrary direction in the X-Y-Z space, by controlling driving forces for causing an essential operation of the actuator as mentioned above and combining the driving forces.

According to the present invention, a miniatruzied and very thin electrostatic three-dimensional actuator can be readily manufactured by adopting a manufacturing process of a semiconductor.

Besides, though an instance of the electrostatic-type three-dimensional actuator provided with the upper fixed electrode 2 on the upper side of the movable electrode 3 and with the lower fixed electrode 5 on the lower side of the movable electrode 3 has been explained in the above-described embodiment, it is needless to say that an actuator provided with the upper fixed electrode 2 alone on the upper side of the movable electrode 3 can fundamentally practically serve as an electrostaitc-type three-dimensional actuator. The movable electrode 3 in this case includes the fifth plane electrode 3a on its upper surface, but the sixth plane electrode 3b on the opposite surface is not necessary to the movable electrode 3.

Although not particularly illustrated in the drawings, a plurality of pairs of electrodes of the three-dimensional actuator in the above embodiment may be provided and a movable section is formed by firmly connecting the respective plane electrodes of the movable electrode by means of an electric insulator. The plurality of fixed electrodes are respectively located above the electric insulator. The forces generating between each pairs of the electrodes are separately varied, thereby enabling the movable section to move not only parallel but also rotationally.

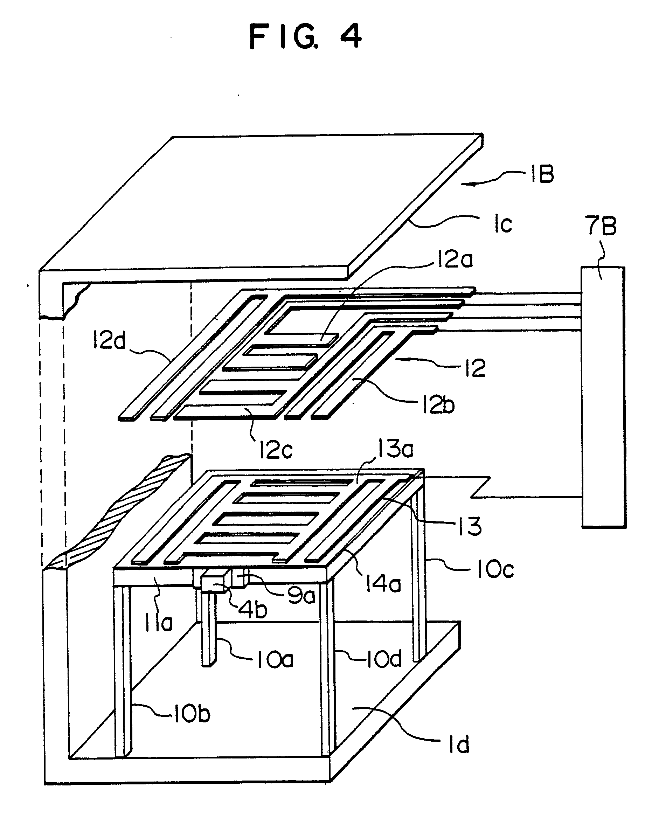

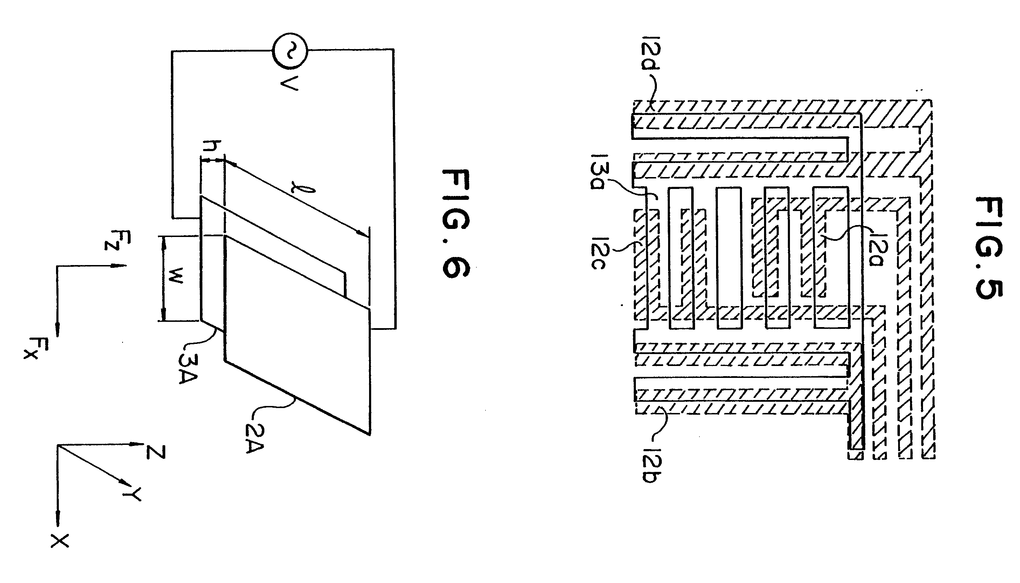

In another embodiment shown in Figs. 4 and 5, only an upper fixed electrode 12 corresponding to the first electrode body in the embodiment shown in Figs. 1 to 3 is provided for the fixed electrode, in order to facilitate the actuator to easily be assembled and processed. A plane electrode 13a is provided only on the upper surface of a movable electrode 13 corresponding to the second electrode body so as to oppose to plane electrodes 12a, 12b, 12c and 12d of the upper fixed electrode 12.

The movable electrode 13 is mounted on the upper surface of a movable body holder 11a with an interposed insulating layer 14. An optical head 4b is disposed on one side end surface of the movable body holder 11a to interpose an insulator 9a therebetween.

The movable body holder 11a is secured to an upper surface 1d of the lower portion of a holder 1B by means of support springs 10a, 10b, 10c and 10d made of an elastic material having a characteristic such that a rigidity in the Z direction is relatively high and that in the X and Y axes is lower. As a result, the movable body holder 11a is not displaced in the Z direction even when a suction force acts between the upper fixed electrode 12 and the movable electrode 13, but the holder moves only on the X-Y plane. A control method of drive of the movable electrode in this embodiment is similar to that in the embodiment of Fig. 1 in the X and Y axis directions, except that there is no lower fixed electrode in the embodiment of Fig. 4. Reference numeral 7B is a controller similarly to the embodiment of Fig. 1, which is connected to the respective plane electrodes 12a, 12b, 12c, 12d and 13a.

In the embodiment shown in Fig. 4, both upper fixed electrode 12 and movable electrode 13 comprise a plurality of rectangular electrodes.

The upper fixed electrode 12 comprises in combination the plane electrodes 12a, 12c having rectangular portions each with a wide width in the X direction and a narrow width in the Y direction and the plane electrodes 12b, 12d having rectangular portions each with a narrow width in the X direction and a wide width in the Y direction, and is secured to a lower surface 1c of the upper portion of the holder 1B.

The movable electrode 13 opposes to the upper fixed electrode 12 with a spaced short interval therebetween, and is composed of the plane electrode 13a having rectangular portions roughly overlapping the respective plane electrodes 12a, 12b, 12c and 12d.

Fig. 5 is an illustration of the actuator of Fig. 4 viewed from the top thereof in the Z direction. In the drawing, the respective plane electrodes 12a to 12d of the upper fixed electrode 12 in the neutral state are illustrated by a broken line and the plane electrode 13a of the movable electrode 13 is illustrated by a continuous line.

The respective plane electrodes 12a to 12d of the upper fixed electrode 12 are overlapped by the corresponding rectangular portions of the plane electrode 13a of the opposed movable electrode 13, by half a narrower width of each plane electrode. The plane electrodes 12b and 12d are located in the X direction, and portions of the plane electrodes 12b and 12d which are not overlapped by the corresponding rectangular portions of the plane electrode 13a are on the half sides of the plane electrodes 12b and 12d, which sides oppose to each other. Similarly, the plane electrodes 12a and 12c are located in the Y direction and portions of the plane electrodes 12a and 12c which are not overlapped by the corresponding rectangular portions of the plane electrode 13a are on the half sides of the plane electrodes 12a and 12c, which sides oppose to each other.

The same principle as the embodiment in Fig. 1 is utilized for the purpose of generating not only a attraction force but also a force to laterally displacing the movable electrode by roughly overlapping the opposing fixed electrode and movable electrode so as to move the movable electrode 13 on the X-Y plane. However, in the embodiment of Fig. 4, the plane electrodes are arranged to include a plurality of long and narrow rectangular postions, for elongating end portions of the electrodes which are effective in generating the lateral force. Accordingly, the actuator according to this second embodiment can generate a larger lateral force owing to the same areas of the plane electrodes as in the first embodiment at a certain voltage.

Further, since the movable electrode is hardly displaced in the Z direction in the embodiment of Fig. 4, an interval between the movable electrode 13 and the upper fixed electrode 12 can be reduced. Thanks to that point, the laterally driving force (driving force in the X and Y axes) is also increased.

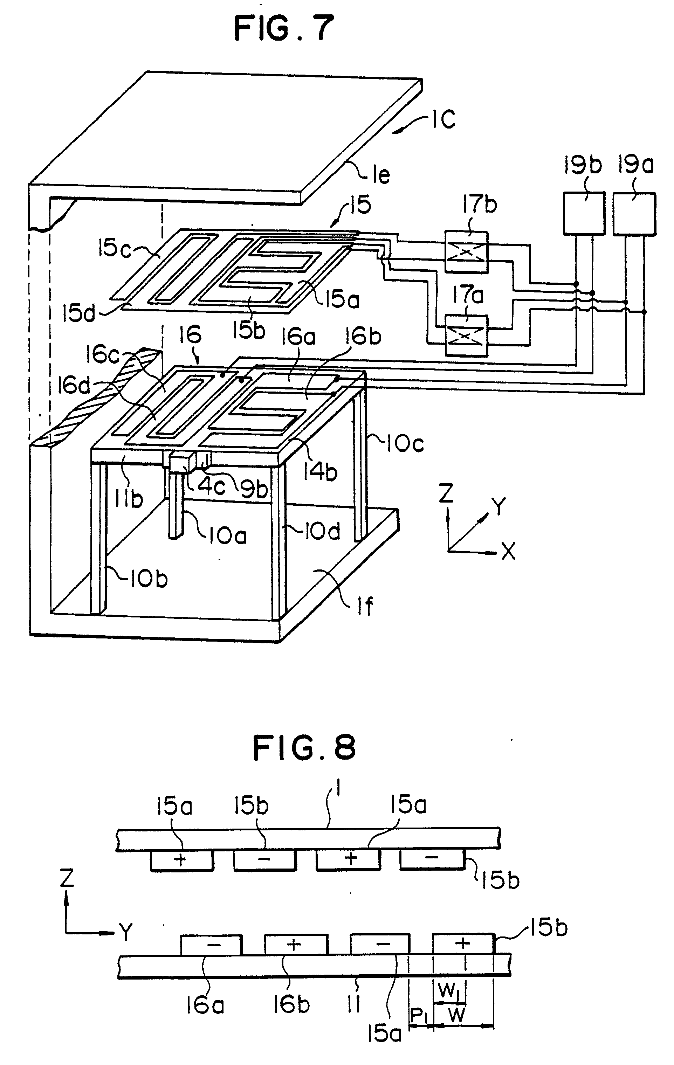

Fig. 7 is a perspective view of an electrostatic two-dimensional actuator which is a third embodiment of the present invention. In this embodiment, the pair of electrodes 12, 13 of the embodiment shown in Fig. 4 are replaced for a pair of electrodes 15 (15a to 15d) and 16 (16a to 16d) having structures different from those of the electrodes of the embodiment in Fig. 4.

The fixed electrode 15 comprises driving electrodes 15a, 15b in the Y direction and driving electrodes 15c, 15d in the X direction as shown in Fig. 7, and is secured to the lower surface 1a of the upper portion of a fixture holder 1c. The movable electrode 16 is composed of driving electrodes 16a, 16b in the Y direction and driving electrodes 16c, 16d in the X direction, and is secured to the upper surface of a movable body holder 11b via a dielectric 14.

Fig. 8 illustrates one portion of a cross section of the Y-direction driving electrodes of both fixed and movable electrodes 15, 16 in the vicinity of the center portion of the actuator in the X direction, which cross section is vertical with respect to the X axis. The electrodes 16a, 16b of the movable electrode 16 are secured to a movable body holder 14b in parallel with the electrodes 15a, 15b of the fixed electrode 15 secured to the fixture holder 1b, interposing a short interval therebetween. The electrodes 15a, 15b of the fixed electrode are adjacent to each other at a distance $P_1$ and similarly, the electrodes 16a, 16b of the movable electrode are adjacent to each other at a distance $P_1$. The electrodes 15a, 15b of the fixed electrode are dislocated in the negative direction of the Y axis with respect to the electrodes 16a, 16b of the movable electrode 16. The electrodes 15a, 15b, 16a, 16b are located in such a manner that an overlapping amount w· of any pair of electrodes is maintained constant.

Subsequently, an operation of the actuator in this embodiment will be described. In Fig. 8, when the movable body holder 11b is driven in the negative direction of the Y axis, each pair of adjacent electrodes of the fixed electrode 15 and the movable electrode 16 include different polarities from each other. A voltage is applied to the fixed and movable electrodes so that the electrode of the fixed electrode having the same polarity as the corresponding electrode of the movable electrode is positioned in the positive direction with respect to the corresponding movable electrode and the electrode of the fixed electrode having the different polarity from the corresponding electrode of the movable electrode is positioned in the negative direction with respect to the corresponding movable electrode, as viewed from the movable electrode side. As a result, a suction force acts between the fixed electrode 15a and the movable electrode 16a, and between the fixed electrode 15b and the movable electrode 16b, and a resilient force acts between the electrodes 15b and 16a, and between the electrodes 15a and 16b. Both of the suction and resilient forces result in a force for driving the movable electrode 16 in the negative direction of the Y axis. A force in the Z direction is effectively decreased because the suction force and the resilient force cancel

6

each other. When the movable electrode 16 moves to the position where they overlap the fixed electrode 15 in the Z direction, the driving force in the Y direction does not operate. Provided that the movable electrode 16 further moves to be brought into a dislocated state similar to the state shown in Fig. 8, the movable electrode 16 can be still further moved owing to application of a voltage to the movable and fixed electrodes as in Fig. 8.

For the purpose of moving the movable electrode in the positive direction of the Y axis, the polarity of the voltage applied to either of the movable or fixed electrode should be inverted.

Referring to Fig. 7, a driving circuit is comprised of a voltage control portion 19a and a polarity switching portion 17a. If a voltage having the inverted polarity can be generated by the voltage control portion 19a, the polarity switching portion 17a may be omitted.

A method for driving the movable electrode in the Y direction has been described so far by way of example, but a driving method of the movable electrode in the X direction is similar to the driving method in the Y direction. Since the configurations of the electrodes in the above-described embodiments are plane-like, it is easy to manufacture a highly precise actuator by adopting the art for manufacturing a semiconductor.

Further, though the multidimensional actuator used to precisely position an optical head in the multidimensional direction has been explained in the descriptions of the respective above embodiments, the present invention is capable of being applied to not only this but also other industrial fields.

Moreover, the first and third electrode body are fixed and the second electrode body is movable in the respective above-mentioned embodiments. However, according to the present invention, the second electrode body may be fixed and the first electrode body may be movable.

As described above, in accordance with the present invention, it is possible to provide a small-sized light-weight electrostatic multidimensional actuator which causes no friction and can generate a displacement sufficient to precisely position an optical head and so on.

## Claims

1. An electrostatic-type multidimensional actuator characterized in that said actuator comprises:
a first electrode body (2) including a first plane electrode (2b) having a shape symmetrical with respect to the X axis, a second plane electrode (2d) symmetrical to said first plane electrode with respect to the Y axis orthogonal to the X axis, a third plane electrode (2a) having a shape symmetrical with respect to the Y axis, and a fourth plane electrode (2c) symmetrical to said third plane electrode with respect to the X axis which are mounted on an electrical insulator in combination with one another;
a second electrode body (3) serving as a fifth plane electrode, (3a;3b) which extends opposite to and is spaced at a short distance ($h_1$) from said first electrode body, including a configuration symmetrical with respect to the X and Y axes, a shape of the shadow projecting from said second electrode body (3) to said first electrode assembly in a direction of the Z axis orthogonal to the X and Y axes being located inside the respective plane electrodes of said first electrode body (2);
an elastic member (10) for suporting between said first electrode body and said second electrode body; and
means (7a) for controlling relative electrical potentials of the first to fourth plane electrodes with respect to the fifth plane electrode, respectively.

2. An electrostatic-type multidimensional actuator characterized in that said actuator comprises:
a first electrode body (2) including a first plane electrode (2b) having a shape symmetrical with respect to the X axis, a second plane electrode (2d) symmetrical to said first plane electrode with respect to the Y axis orthogonal to the X axis, a third plane electrode (2a) having a shape symmetrical with respect to the Y axis, and a fourth plane electrode (2c) symmetrical to said third plane electrode with respect to the X axis which are mounted on an electrical insulator (1A) in combination with one another;
a second electrode body (3) including a fifth plane electrode (3a), which extends opposite to and spaced at a short distance ($h_1$) from said first electrode (2), including a configuration symmetrical with respect to the X and Y axes, a shape of the shadow projecting from said second electrode body to said first electrode body in a direction of the Z axis orthogonal to the X and Y axes being located inside the respective plane electrodes of said first electrode body, said second electrode body further including a sixth plane electrode (3b) formed on the other side opposite to one side on which the fifth electrode is mounted, said sixth plane electrode having the same structure as that of said fifth plane electrode;
a third electrode body (5) including seventh to tenth plane electrodes (5a,5b,5c,5d) mounted on the other plane of said electrical insulator (1A), said seven to tenth plane electrodes being arranged in the same manner as the first to fourth plane electrodes of said first electrode assembly and symmetrical to the first electrode body with respect to said second electrode body (3), said third electrode body (5) extending opposite to and being spaced at a short distance (h₁) from said second electrode body;

an elastic member (10) for supporting said second electrode body on said electric insulator; and

means (7A) for controlling relative electrical potentials of the first to fourth plane electrodes with respect to the fifth plane electrode and relative electrical potentials of the seventh to tenth plane electrodes with respect to the sixth plane electrode, respectively.

3. An electrostatic-type multidimensional actuator characterized in that said actuator comprises:

a first electrode body including a plurality of strip-like plane electrodes (12a,12c) whose dimensions in a direction of the X axis are large and whose dimensions in a direction of the Y axis orthogonal to the X axis are small and a plurality of associated strip-like plane electrodes (12b,12d) whose dimensions in the direction of the Y axis are large and whose dimensions in the direction of the X axis are small, said strip-like plane electrodes and said associated strip-like plane electrodes being mounted on a plane (12) of an electrical insulator in combination with one another;

a second electrode body (13) which extends opposite to and spaced at a short distance from said first electrode assembly, including strip-like plane electrodes (13a) having dislocated configurations overlapping the striplike portions of the respective plane electrodes of said first electrode body;

an elastic member for supporting between said first electrode body and said second electrode body; and

means (7B) for controlling relative electrical potentials of said plurality of plane electrodes of said first electrode body (12) with respect to the plurality of plane electrodes of said plurality of second electrode body (13), respectively.

4. An electrostatic-type actuator characterized in that said actuator comprises: an electrode (15) having a plurality of protruded rectangular electrode pieces (15a,15b,15c,15d) being mounted on an electrical insulator with another electrode pieces (16a,16b,16c,16d) of an associated electrode (18) located to interpose between the protruded electrode pieces of said former electrode (15) at constant intervals; said pair of electrodes extending opposite to each other to form a predetermined space therebetween; the electrode piece opposite to said associated electrode pieces being dislocated in a positive or negative direction orthogonal to the longitudinal direction of said electrode pieces, while one of said pair of electrodes being arranged to be fixed and the other being arranged to be movable; and means (19a,19b) for applying a voltage being provided between said pair of electrodes; and the adjacent electrode pieces having different poralities to each other.

# FIG. 1

# FIG. 2

2a,5a

2d,5d

2b,5b

2c,5c

# FIG. 3

2d    4a    8    2b

1A

h1

h2

Z

X

10    5d    6    3    5b

EP 0 381 212 A2

# F I G. 4

# FIG. 5

# FIG. 6

## FIG. 7

## FIG. 8